# EUROPEAN PATENT SPECIFICATION

(11) **EP 1 392 130 B1**
(45) Date of publication and mention of the grant of the patent: **30.12.2009**
(21) Application number: 02739168.9
(22) Date of filing: 23.04.2002
(51) Int. Cl.: A23L 1/09, A23L 1/236, A23L 2/00, A23L 2/52, A23L 2/60

(54) **USE OF ERYTHRITOL AND D-TAGATOSE IN DIET OR REDUCED-CALORIE BEVERAGES AND FOOD PRODUCTS**
VERWENDUNG VON ERYTHRIT UND D-TAGATOSE IN DIÄT- ODER KALORIENREDUZIERTEN GETRÄNKEN UND NAHRUNGSMITTELPRODUKTEN
UTILISATION D'ERYTHRITOL ET DE D-TAGATOSE DANS DES BOISSONS ET DES PRODUITS ALIMENTAIRES DE REGIME OU A CALORIES REDUITES

(30) Priority: 27.04.2001 US 287215 P
(43) Date of publication of application: 03.03.2004
(73) Proprietor: PepsiCo, Inc., Purchase, New York 10577 (US)
(72) Inventor: LEE, Thomas, Scarsdale, NY 10583 (US); OLCESE, Gino, Scarsdale, NY 10583 (US); BELL, Zena, Hartsdale, NY 10530 (US); ROY, Glenn, Beacon, NY 12508 (US); MUTILANGI, William, Peekskill NY 10566 (US); HIRS, Rein, Mahopac, NY 10541 (US); GIVEN, Peter, Ridgefield, CT 06877 (US)
(74) Representative: Bassil, Nicholas Charles
(86) International application number: PCT/US2002/012484
(87) International publication number: WO 2002/087359

(56) References cited:
- WO-A-00/42865
- WO-A-01/28357
- WO-A-97/22263
- WO-A-99/30577

## Description

### BACKGROUND OF THE INVENTION

### Field of the Invention

This invention relates to the use of a combination of a eryllritol and D-tagatose in a variety of diet or reduced calorie beverages. This invention particularly relates to naturally sweetened, zero- and low-calorie beverages sweetened only with erythritol and D-tagatose, as well as to methods of making the same. The invention also relates to reduced-calorie beverages, sweetened with a erythritol, D-tagatose and at least one nutritive sweetener, which taste similar to naturally sweetened, full-calorie beverages. The invention also relates to methods of making such reduced-calorie beverages.

### Related Background Art

Zero- or low-calorie beverages are very popular. Such diet products typically contain, singularly or in blends, non-nutritive sweeteners such as aspartame, acesulfame-K, saccharin, sucralose and cyclamate. While consumers do not have to worry about calories with such diet products, some consumers would prefer a naturally sweetened, zero- and low-calorie beverage or food product. However, there are no naturally occurring, intense sweeteners approved for use in the United States. It is, therefore, difficult to formulate good tasting, naturally sweetened diet or reduced-calorie beverages.

Sorbitol and mannitol are examples of naturally occurring, low intensity, low-calorie sweeteners. The simple use of sorbitol or mannitol to make low-calorie sweetened beverages would result in products which have a different quality of sweetness than full-calorie, naturally sweetened products, not to mention certain gastrointestinal issues. Likewise, partial substitution of such a low-intensity natural sweetener would produce reduced-calorie products lacking in certain respects as compared with naturally sweetened, full-calorie counterparts. All of these products may not be sweet enough, may have off tastes or may have incompatibilities with certain flavors. Hence, there is a need for good quality, naturally sweetened, diet or reduced-calorie beverages.

### SUMMARY OF THE INVENTION

This invention is directed to a diet beverage sweetened only with erythritol and D-tagatose.

This invention is also directed to diet or reduced-calorie beverages sweetened with erythritol, D-tagatose and at least one nutritive sweetener. In certain preferred embodiments, the at least one nutritive sweetener is selected from fructose, sucrose, dextrose, maltose, trehalose, rhamnose, corn syrups and fructo-oligosaccharides.

In preferred embodiments of the present invention, erythritol is employed in an amount of about 0.1% to about 3.5% based on finished beverage weight and D-tagatose is employed in an amount of about 0.1% to about 1.0% based on finished beverage weight.

The diet or reduced-calorie beverages of the present invention can be selected from soft drinks, fountain beverages, frozen ready-to-drink beverages, coffee beverages, tea beverages, powdered soft drinks, liquid concentrates, flavored waters, enhanced waters, fruit juice and fruit juice flavored drinks, sport drinks and alcoholic drinks. The diet or reduced-calorie food products of the present invention can be selected from confections, dairy products, gelatins, puddings, cake mixes, cereals or cereal-based products or baked goods.

The present invention is further directed to methods of making diet or reduced-calorie beverages and food products which comprise including in a beverage or a food product erythritol, D-tagatose and, optionally, at least one nutritive sweetener.

### DETAILED DESCRIPTION

The present inventors have discovered that by blending two natural low-intensity sweeteners, namely a sugar alcohol such as erythritol and D-tagatose, a sweetener composition which imparts a sugar-like sweetness is attained. Further, there is no aftertaste in beverages or food products sweetened with the combination of sugar alcohol and D-tagatose, and there are no known problems with flavor compatibility. Hence, such a combination of sugar alcohol and D-tagatose can be used alone to provide sweetness in zero- or low-calorie beverages or can be used in combination with at least one nutritive sweetener to reduce the caloric content of full-calorie beverages, while maintaining the taste of full-calorie products.

As used herein, "taste" refers to a combination of sweetness perception, temporal effects of sweetness perception, i.e., on-set and duration, off-tastes, e.g., bitterness and metallic taste, residual perception (aftertaste) and tactile perception, e.g., body and thickness. As used herein, "zero-calorie" means having less than 5 calories per serving, e.g., per 8 oz. for beverages (227ml). As used herein, "low-calorie" means having less than or equal to 40 calories per serving, e.g., per 8 oz. for beverages. As used herein, "diet" refers to either "zero-calorie" or "low-calorie".
What is more, "reduced calorie" means having a reduced number of calories as compared with a full-calorie counterpart; more particularly, "reduced calorie" typically means having at least a 25% reduction in calories per serving, e.g., per 8 oz. for beverages.

According to the first embodiment of the present invention, a diet or reduced-calorie beverage is sweetened with (a) a sugar alcohol and (b) D-tagatose. According to a second embodiment, a diet or reduced-calorie beverage is sweetened with (a) a sugar alcohol, (b) D-tagatose and (c) at least one nutritive sweetener.

Beverages include, without limitation, carbonated soft drinks, fountain beverages, frozen ready-to-drink beverages, coffee beverages, tea beverages, powdered soft drinks, as well as liquid concentrates, flavored waters, enhanced waters, fruit juice and fruit juice flavored drinks, sport drinks and alcoholic products. The beverage may be carbonated or noncarbonated. In a preferred embodiment of the present invention, the beverage is a flavored water, an enhanced water, a carbonated cola-flavored soft drink or a frozen carbonated beverage (FCB).

Sugar alcohol for use in the present invention is erythritol. Typically, erythritol is included in an amount from about 0.1% to 3.5% of the finished beverage, preferably from about 0.2% to 2.5% of the finished beverage. Erythritol can be obtained from Cerestar (Hammond, Indiana) and is reported to generate almost no calories (0.2 calorie/g).

D-tagatose is included in an amount from about 0.1% to 1.0% of the finished beverage by weight, preferably 0.2% to 0.9% of the finished beverage by weight, and most preferably 0.3% to 0.6% of the finished beverage by weight. D-tagatose can be obtained from Arla Foods (Union, New Jersey) and is reported to impart about 1.5 calories/g.

Any nutritive sweetener is suitable for use; as used herein, a "nutritive" sweetener is one which provides significant caloric content in typical usage amounts, i.e., more than about 1 calorie per serving (8 oz. for beverages). Suitable nutritive sweeteners include, without limitation, fructose, sucrose, dextrose, maltose, trehalose, rhamnose, corn syrups and fructo-oligosaccharides. One of ordinary skill in this art will readily appreciate that nutritive sweeteners may be combined in various ratios to form a nutritive sweetener blend suitable for use in the present invention. Precise ratios of nutritive sweeteners depend on the combination of sweeteners used in a given blend and the desired overall sweetness for a given application. Appropriate ratios can be readily determined by one of ordinary skill in this art.

One of ordinary skill in this art will also readily appreciate that the amount of the nutritive sweetener or blend of nutritive sweeteners in a finished beverage will vary depending on a variety of factors such as the desired overall sweetness for a given application. Appropriate amounts can be readily determined by one of ordinary skill in this art.

The combination of sugar alcohol and D-tagatose can be readily used to substitute a portion of the nutritive sweetener in a full-calorie beverage without losing sweetness or taste. This is an unexpected advantage of the reduced-calorie beverages of the present invention.

Another embodiment of the present invention is directed to methods of making diet or reduced-calorie beverages which comprise sweetening beverages with a combination of (a) erythritol (b) D-tagatose and, optionally, (c) at least one nutritive sweetener.

It is possible to include any other ingredients typically used in beverages in appropriate amounts in the diet or reduced-calorie beverages of the present invention. One of ordinary skill in the art would be capable of determining appropriate usage levels. Such ingredients include, without limitation, flavors, colors, preservatives, acidulants, buffering salts, caffeine, anti-foam agents and foaming agents.

The examples which follow are intended as an illustration of certain preferred embodiments of the invention, and no limitation of the invention is implied.

### EXAMPLE 1

Erythritol (3% or 30 g per 1 L) and D-tagatose (0.9% or 9 g per 1 L) were dissolved in 0.9 L Aquafina® water. Sodium citrate (0.113 g) and citric acid (0.13 g) were added to the solution. Additional water was added to make 1 L finished beverage. A good tasting, naturally sweetened, low-calorie water was obtained.

### EXAMPLE 2

Erythritol (3% or 30 g per 1 L) and D-tagatose (0.9% or 9 g per 1 L) were dissolved in 0.9 L Aquafina® water. Sodium citrate (0.113 g), citric acid (0.13 g) and 0.2% fruit flavor (based on finished beverage weight) were added to the solution. Additional water was added to make 1 L finished beverage. A good tasting, naturally sweetened, low-calorie, fruit flavored water was obtained. EXAMPLE 3

Erythritol (3% or 30 g per 1 L) and D-tagatose (0.9% or 9 g per 1 L) were dissolved in 0.9 L Aquafina® water. Sodium citrate (0.113 g), citric acid (0.13 g), 0.2% fruit flavor (based on finished beverage weight) and fructose (0.29% or 2.9 g per 1 L) were added to the solution. Additional water was added to make 1 L finished beverage. A good tasting, naturally sweetened, low-calorie (10 calories per 8 oz.(1 oz = 28.35 g), fruit flavored sport drink was obtained. The level of sweetness of the drink was the same or more than that of a sport drink made with only high fructose corn syrup (35 calories per 8 oz (1 oz = 28.35 g)).

### EXAMPLE 4

Forty percent of the high fructose corn syrup of an 11 Brix cola beverage was replaced with a 2% erythritol/0.9% D-tagatose blend. A reduced-calorie, naturally sweetened cola beverage having the same sweetness and taste as its full-calorie counterpart was obtained.

### EXAMPLE 5

Erythritol (3% or 30 g per 1 L) and D-tagatose (0.9% or 9 g per 1 L) were dissolved in 0.9 L Aquafina® water. Sodium citrate (0.113 g), citric acid (0.13 g), 0.2% fruit flavor (based on finished beverage weight), vitamin B complex (10% recommended daily value based on finished beverage) and fructose (0.29% or 2.9 g per 1 L) were added to the solution. Additional water was added to make 1 L finished beverage. A good tasting, naturally sweetened, low-calorie (10 calories per 8 oz. (1 oz = 28.35 g)), fruit flavored sport drink was obtained. The level of sweetness of the drink was the same or more than that of a sport drink made with only high fructose corn syrup (35 calories per 8 oz (1 oz = 28.35 g)).

### EXAMPLE 6

To a gallon (1 gallon = 3,79 L) of unsweetened Diet Mountain Dew® base, erythritol (2% by weight of finished drink) and D-tagatose (0.9% by weight of finished drink) were added, and the solution was stirred until complete dissolution occurred. Fructose (3.6% based on weight of finished drink) was then added, and again the solution was stirred until complete dissolution. The syrup thus prepared was placed into a frozen carbonated beverage machine (Cornelius, V3, Wisconsin) in a 1 plus 5 throw (1 part syrup with 5 parts carbonated water). The resulting naturally sweetened, low-calorie FCB has good carbon dioxide overrun, smooth, creamy mouthfeel and great taste. In addition, the syrup can be successively run through the FCB machine to consistently achieve a high quality FCB.

Other variations and modifications of this invention will be obvious to those skilled in this art. This invention is not to be limited except as set forth in the following claims.

## Claims

1. A diet beverage comprising (a) erythritol and (b) D-tagatose.

2. The diet beverage according to claim 1, wherein the erythritol is present in an amount of 0.1% to about 3.5% based on finished diet beverage weight.

3. The diet beverage according to claim 2, wherein the erythritol is present in an amount of about 0.2% to about 2.5% based on finished diet beverage weight.

4. The diet beverage according to claim 1, wherein the D-tagatose is present in an amount of about 0.1 % to about 1.0% based on finished diet beverage weight.

5. The diet beverage according to claim 4, wherein the D-tagatose is present in an amount of about 0.2% to about 0.9% based on finished diet beverage weight.

6. The diet beverage according to claim 5, wherein the D-tagatose is present in an amount of about 0.3% to about 0.6% based on finished diet beverage weight.

7. The diet beverage according to claim 1, wherein said beverage is selected from the group consisting of soft drinks, fountain beverages, frozen ready-to-drink beverages, coffee beverages, tea beverages, powdered soft drinks, liquid concentrates, flavored waters, enhanced waters, fruit juice and fruit juice flavored drinks, sport drinks and alcoholic drinks.

8. The diet beverage according to claim 7, wherein the diet beverage is a cola soft drink or a frozen carbonated beverage.

9. The diet beverage according to claim 1 further comprising at least one nutritive sweetener.

10. The diet beverage according to claim 9, wherein the at least one nutritive sweetener is selected from the group consisting of fructose, sucrose, dextrose, maltose, trehalose, rhamnose, corn syrups and fructo-oligosaccharides.

11. The diet cola soft drink according to claim 8, further comprising at least one nutritive sweetener, wherein the at least one nutritive sweetener is fructose.

12. The diet frozen carbonated beverage according to claim 8, further comprising at least one nutritive sweetener, wherein the at least one nutritive sweetener is fructose.

13. A method of making a diet beverage including the step of sweetening said diet beverage with (a) erythritol and (b) D-tagatose.

14. The method according to claim 13, wherein the erythritol is present in an amount of 0.1% to about 3.5% based on finished diet beverage weight.

15. The method according to claim 14, wherein the erythritol is present in an amount of about 0.2% to about 2.5% based on finished diet beverage weight.

16. The method according to claim 13, wherein the D-tagatose is present in an amount of about 0.1 % to about 1.0% based on finished diet beverage weight.

17. The method according to claim 16, wherein the D-tagatose is present in an amount of about 0.2% to about 0.9% based on finished diet beverage weight.

18. The method according to claim 17, wherein the D-tagatose is present in an amount of about 0.3% to about 0.6% based on finished diet beverage weight.

19. The method according to claim 13, wherein said beverage is selected from the group consisting of soft drinks, fountain beverages, frozen ready-to-drink beverages, coffee beverages, tea beverages, powdered soft drinks, liquid concentrates, flavored waters, enhanced waters, fruit juice and fruit juice flavored drinks, sport drinks and alcoholic drinks.

20. The method according to claim 19, wherein the diet beverage is a cola soft drink or a frozen carbonated beverage.

21. The method according to claim 13 further comprising the step of sweetening said diet beverage with at least one nutritive sweetener.

22. The method according to claim 21, wherein the at least one nutritive sweetener is selected from the group consisting of fructose, sucrose, dextrose, maltose, trehalose, rhamnose, corn syrups and fructo-oligosaccharides.

## Patentansprüche

1. Diätgetränk, welches (a) Erythrit und (b) D-Tagatose umfasst.

2. Diätgetränk gemäß Anspruch 1, worin das Erythrit in einer Menge von 0,1% bis etwa 3,5% basierend auf fertigem Diätgetränkgewicht vorhanden ist.

3. Diätgetränk gemäß Anspruch 2, worin das Erythrit in einer Menge von etwa 0,2% bis etwa 2,5% basierend auf fertigem Diätgetränkgewicht vorhanden ist.

4. Diätgetränk gemäß Anspruch 1, worin die D-Tagatose in einer Menge von etwa 0,1% bis etwa 1,0% basierend auf fertigem Diätgetränkgewicht vorhanden ist.

5. Diätgetränk gemäß Anspruch 4, worin die D-Tagatose in einer Menge von etwa 0,2% bis etwa 0,9% basierend auf fertigem Diätgetränkgewicht vorhanden ist.

6. Diätgetränk gemäß Anspruch 5, worin die D-Tagatose in einer Menge von etwa 0,3% bis etwa 0,6% basierend auf fertigem Diätgetränkgewicht vorhanden ist.

7. Diätgetränk gemäß Anspruch 1, wobei besagtes Getränk ausgewählt ist aus der Gruppe bestehend aus alkoholfreien Getränken, Trinkbrunnengetränken, gefrorenen trinkfertigen Getränken, Kaffeegetränken, Teegetränken, pulverisierten alkoholfreien Getränken, flüssigen Konzentraten, aromatisierten Wässern, angereicherten Wässern, Fruchtsaft und mit Fruchtsaft aromatisierten Getränken, Sportgetränken und alkoholischen Getränken.

8. Diätgetränk gemäß Anspruch 7, wobei das Diätgetränk ein alkoholfreies Cola-Getränk oder ein gefrorenes kohlensäurehaltiges Getränk ist.

9. Diätgetränk gemäß Anspruch 1, welches ferner mindestens einen nährenden Süßstoff umfasst.

10. Diätgetränk gemäß Anspruch 9, wobei der mindestens eine nährende Süßstoff ausgewählt ist aus der Gruppe bestehend aus Fructose, Saccharose, Dextrose, Maltose, Trehalose, Rhamnose, Stärkezuckersirup aus Mais und Fructo-Oligosacchariden.

11. Alkoholfreies Cola-Diätgetränk gemäß Anspruch 8, welches ferner mindestens einen nährenden Süßstoff umfasst, wobei der mindestens eine nährende Süßstoff Fructose ist.

12. Gefrorenes, kohlensäurehaltiges Diätgetränk gemäß Anspruch 8, welches ferner mindestens einen nährenden Süßstoff umfasst, wobei der mindestens eine nährende Süßstoff Fructose ist.

13. Verfahren zum Herstellen eines Diätgetränks, welches den Schritt des Süßens von besagtem Diätgetränk mit (a) Erythrit und (b) D-Tagatose einschließt.

14. Verfahren gemäß Anspruch 13, worin das Erythrit in einer Menge von 0,1% bis etwa 3,5% basierend auf fertigem Diätgetränkgewicht vorhanden ist.

15. Verfahren gemäß Anspruch 14, worin das Erythrit in einer Menge von etwa 0,2% bis etwa 2,5% basierend auf fertigem Diätgetränkgewicht vorhanden ist.

16. Verfahren gemäß Anspruch 13, worin die D-Tagatose in einer Menge von etwa 0,1% bis etwa 1,0% basierend auf fertigem Diätgetränkgewicht vorhanden ist.

17. Verfahren gemäß Anspruch 16, worin die D-Tagatose in einer Menge von etwa 0,2% bis etwa 0,9% basierend auf fertigem Diätgetränkgewicht vorhanden ist.

18. Verfahren gemäß Anspruch 17, worin die D-Tagatose in einer Menge von etwa 0,3% bis etwa 0,6% basierend auf fertigem Diätgetränkgewicht vorhanden ist.

19. Verfahren gemäß Anspruch 13, wobei besagtes Getränk ausgewählt ist aus der Gruppe bestehend aus alkoholfreien Getränken, Trinkbrunnengetränken, gefrorenen trinkfertigen Getränken, Kaffeegetränken, Teegetränken, pulverisierten alkoholfreien Getränken, flüssigen Konzentraten, aromatisierten Wässern, angereicherten Wässern, Fruchtsaft und mit Fruchtsaft aromatisierten Getränken, Sportgetränken und alkoholischen Getränken.

20. Verfahren gemäß Anspruch 19, wobei das Diätgetränk ein alkoholfreies Cola-Getränk oder ein gefrorenes kohlensäurehaltiges Getränk ist.

21. Verfahren gemäß Anspruch 13, welches ferner den Schritt des Süßens von besagtem Diätgetränk mit mindestens einem nährenden Süßstoff umfasst.

22. Verfahren nach Anspruch 21, wobei der mindestens eine nährende Süßstoff ausgewählt ist aus der Gruppe bestehend aus Fructose, Saccharose, Dextrose, Maltose, Trehalose, Rhamnose, Stärkezuckersirup aus Mais und Fructo-Oligosacchariden.

## Revendications

1. Boisson de régime comprenant (a) de l'érythritol et (b) du D-tagatose.

2. Boisson de régime selon la revendication 1, dans laquelle l'érythritol est présent en une quantité de 0,1 % à environ 3,5 % sur la base du poids de la boisson de régime finie.

3. Boisson de régime selon la revendication 2, dans laquelle l'érythritol est présent en une quantité d'environ 0,2 % à environ 2,5 % sur la base du poids de la boisson de régime finie.

4. Boisson de régime selon la revendication 1, dans laquelle le D-tagatose est présent en une quantité d'environ 0,1 % à environ 1,0 % sur la base du poids de la boisson de régime finie.

5. Boisson de régime selon la revendication 4, dans laquelle le D-tagatose est présent en une quantité d'environ 0,2 % à environ 0,9 % sur la base du poids de la boisson de régime finie.

6. Boisson de régime selon la revendication 5, dans laquelle le D-tagatose est présent en une quantité d'environ 0,3 % à environ 0,6 % sur la base du poids de la boisson de régime finie.

7. Boisson de régime selon la revendication 1, dans laquelle ladite boisson est choisie dans le groupe constitué par les boissons sans alcool, les boissons de distributeur, les boissons congelées prêtes à boire, les boissons à base de café, les boissons à base de thé, les boissons sans alcool en poudre, les concentrés liquides, les eaux aromatisées, les eaux améliorées, les boissons à base de jus de fruits ou aromatisées avec un jus de fruits, les boissons pour le sport et les boissons alcoolisées.

8. Boisson de régime selon la revendication 7, dans laquelle la boisson de régime est une boisson sans alcool à base de cola ou une boisson gazeuse congelée.

9. Boisson de régime selon la revendication 1, comprenant en outre au moins un édulcorant nutritif.

10. Boisson de régime selon la revendication 9, dans laquelle le au moins un édulcorant nutritif est choisi dans le groupe constitué par le fructose, le saccharose, le dextrose, le maltose, le tréhalose, le rhamnose, les sirops de maïs et les fructo-oligo-saccharides.

11. Boisson de régime sans alcool à base de cola selon la revendication 8, comprenant en outre au moins un édulcorant nutritif, dans laquelle le au moins un édulcorant nutritif est le fructose.

12. Boisson gazeuse congelée de régime selon la revendication 8, comprenant en outre au moins un édulcorant nutritif, dans laquelle le au moins un édulcorant nutritif est le fructose.

13. Procédé de préparation d'une boisson de régime comprenant l'étape consistant à dulcifier ladite boisson de régime avec (a) de l'érythritol et (b) du D-tagatose.

14. Procédé selon la revendication 13, dans lequel l'érythritol est présent en une quantité de 0,1 % à environ 3,5 % sur la base du poids de la boisson de régime finie.

15. Procédé selon la revendication 14, dans lequel l'érythritol est présent en une quantité d'environ 0,2 % à environ 2,5 % sur la base du poids de la boisson de régime finie.

16. Procédé selon la revendication 13, dans lequel le D-tagatose est présent en une quantité d'environ 0,1 % à environ 1,0 % sur la base du poids de la boisson de régime finie.

17. Procédé selon la revendication 16, dans lequel le D-tagatose est présent en une quantité d'environ 0,2 % à environ 0,9 % sur la base du poids de la boisson de régime finie.

18. Procédé selon la revendication 17, dans lequel le D-tagatose est présent en une quantité d'environ 0,3 % à environ 0,6 % sur la base du poids de la boisson de régime finie.

19. Procédé selon la revendication 13, dans lequel ladite boisson est choisie dans le groupe constitué par les boissons sans alcool, les boissons de distributeur, les boissons congelées prêtes à boire, les boissons à base de café, les boissons à base de thé, les boissons sans alcool en poudre, les concentrés liquides, les eaux aromatisées, les eaux améliorées, les boissons à base de jus de fruits ou aromatisées avec un jus de fruits, les boissons pour le sport et les boissons alcoolisées.

20. Procédé selon la revendication 19, dans lequel la boisson de régime est une boisson sans alcool à base de cola ou une boisson gazeuse congelée.

21. Procédé selon la revendication 13, comprenant en outre l'étape consistant à dulcifier ladite boisson de régime avec au moins un édulcorant nutritif.

22. Procédé selon la revendication 21, dans lequel le au moins un édulcorant nutritif est choisi dans le groupe constitué par le fructose, le saccharose, le dextrose, le maltose, le tréhalose, le rhamnose, les sirops de maïs et les fructo-oligosaccharides.
